# EUROPEAN PATENT APPLICATION

(11) **EP 2 375 832 A2**
(43) Date of publication of application: **12.10.2011**
(21) Application number: 11002945.1
(22) Date of filing: 07.04.2011
(51) Int. Cl.: H04W 52/36

(54) **Method for power allocation of retransmissions**

(30) Priority: 07.04.2010 US 321691 P
(71) Applicant: HTC Corporation, Taoyuan County 330 (TW)
(72) Inventor: Jen, Yu-Chih c/o HTC Corporation, Taoyuan City, Taoyuan County 330 (TW)
(74) Representative: Wagner, Karl H.

(57) **Abstract**

Communication devices and methods thereof. A communication device comprises a controller module and a telecommunication module. The controller module allocates a predetermined or required power to a retransmission signal or a first carrier that carries the retransmission signal, determining a remaining power according to the predetermined or required power and an upper limit power, and distributes the remaining power over at least one new transmission signal or at least one carrier. The telecommunication module, coupled to the controller module, transmits the retransmission signal on a first carrier according to the predetermined or required power, and transmits the retransmission signal on the first carrier according to the predetermined or required power, and transmitting the at least one new transmission signal on the at least one carrier according to each distributed power..

## Description

### BACKGROUND OF THE INVENTION

### Field of the Invention

The disclosure relates generally to power allocation, and, more particularly to communication devices capable of power allocation and methods thereof.

### Description of the Related Art

A Long Term Evolution (LTE) system is an evolved next-generation wireless communication system proposed by the Third Generation Partnership Project (3GPP). The LTE system provides high-speed low-latency packet-based communication at a data rate of up to 100 Mbps. The LTE system includes an Evolved Universal Terrestrial Radio Access Network (EUTRAN) having a plurality of evolved Node-Bs (eNBs), which communicate wirelessly with a plurality of user equipment (UEs) though uplink and downlink radio channels.

In the LTE communication systems, the Evolved Node B receives channel information reports from a user equipment (UE) and provides scheduling of transmission resource allocations to the UE. The channel information report may be a buffer status report, a power headroom report, a channel state information (CSI) report, and so on. The LTE system supports an eNB power control mechanism to control UE transmit power, so that the UE transmit power is sufficient to provide uplink transmission over an allocated bandwidth, while keeping the received Signal-to-Noise Ratio (SNR) at the eNB below a targeted value, thereby preventing excessive power usage, which increases battery life, and reduces intra-cell and inter-cell interference.

The LTE system employs multiple component carriers and carrier aggregation, where multiple component carriers are aggregated to transmit data between eNBs and UEs. The uses of multiple component carriers and carrier aggregation increases complexity of the power allocation for the uplink transmission at UEs. Thus, the communication devices and methods thereof capable of allocating power of multiple carriers during data retransmission are in need.

### BRIEF SUMMARY OF THE INVENTION

Encryption and decryption devices, determiner readable media, and methods thereof are provided.

An embodiment of a communication device is disclosed, comprising a controller module and a telecommunication module. The controller module allocates a predetermined or required power to a retransmission signal or a first carrier that carries the retransmission signal, determining a remaining power according to the predetermined or required power and a upper limit power, and distributes the remaining power over at least one new transmission signal or at least one carrier. The telecommunication module, coupled to the controller module, transmits the retransmission signal on a first carrier according to the predetermined or required power, and transmits the retransmission signal on the first carrier according to the predetermined or required power, and transmitting the at least one new transmission signal on the at least one carrier according to each distributed power.

Another embodiment of a communication device is described, comprising a controller module and a telecommunication module. The controller module distributes transmission power over at least one carrier or at least one transmission signal. The communication module, coupled to the controller module, transmits power information of the distributed transmission power by uplink control information of an uplink control channel or an uplink data channel.

Another method of allocating power in a communication device is provided, comprising allocating, by the communication device, a predetermined or required power to a retransmission signal or a first carrier that carries the retransmission signal, determining, by the communication device, a remaining power according to the predetermined or required power and a upper limit power, distributing, by the communication device, the remaining power over at least one new transmission signal or at least one carrier, transmitting, by the communication device, the retransmission signal on the first carrier according to the predetermined or required power, and transmitting, by the communication device, the at least one new transmission signal on the at least one carrier according to each distributed power..

Another method of allocating power in a communication device is provided, comprising distributing, by the communication device, transmission power over at least one carrier or at least one transmission signal, and transmitting, by the communication device, power information of the distributed transmission power by uplink control information of an uplink control channel or an uplink data channel.

Yet another embodiment of a communication device is shown, comprising a controller module and a telecommunication module. The controller module allocates predetermined power to at least two retransmission signals carried on at least one carrier or at least two carriers that carry at least one retransmission signal. The communication module, coupled to the controller module, transmits the at least two retransmission signals on the at least one carrier or the at least one retransmission signal on the at least two carriers according to each distributed power..

Still another embodiment of a method is provided, comprising distributing, by the communication device, a predetermined upper limit power over at least two retransmission signals carried on at least one carrier or at least two carriers that carry at least one retransmission signal, and transmitting, by the communication device, the at least two retransmission signals on the at least one carrier or the at least one retransmission signal on the at least two carriers according to each distributed power..

### BRIEF DESCRIPTION OF THE DRAWINGS

The invention will become more fully understood by referring to the following detailed description with reference to the accompanying drawings, wherein:

FIG. 1 is a block diagram of wireless communication system 1, incorporating wireless communication device 10 in accordance with the present invention.

FIG. 2 is a block diagram of wireless communication system 2, incorporating wireless communication device 20 in accordance with the present invention.

FIG. 3 is a flowchart of an exemplary method according to the present invention.

FIG. 4 is a flowchart of another exemplary method according to the present invention.

### DETAILED DESCRIPTION OF THE INVENTION

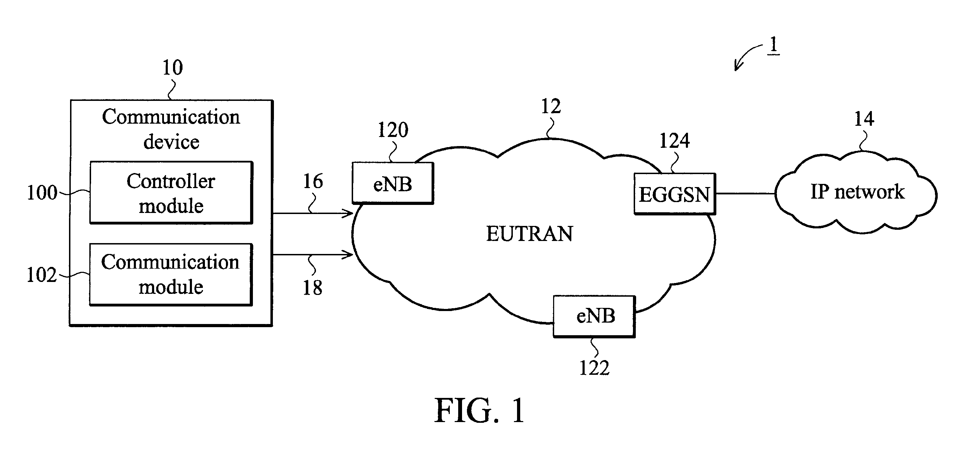

FIG. 1 is a block diagram of a wireless communication system 1, incorporating a communication device 10 in accordance with the present invention. The communication system 1 is an LTE system comprising the communication device 10, an Evolved Universal Terrestrial Radio Access Network EUTRAN 12, and an IP network 14. In the LTE system, a plurality of eNBs 120 and 122 in the EUTRAN 12 communicate with a plurality of remote UEs through the uplink and downlink radio channels, where the uplink and downlink data communication may be carried out on a plurality of component carriers. The EUTRAN 12 then accesses content of the IP network 14 through the Evolved Gateway GPRS Support Node EGGSN 124. The UEs are any device used directly by an end-user for the communication, e.g., handhold mobile phones, laptop determiners equippted with broadband network adaptors, or any other device capable of communicating. The eNB is the radio access port of the LTE system. Each eNB comprises at least one radio transmitter, receiver, control section and power supply. Each eNB comprises an antenna system, e.g., a radio tower, building, and base station. The base station radio equipment includes transceivers and antenna interface equipment, the controllers, and power supplies.

When an uplink transmission of a UE fails, the UE needs to retransmit the uplink data to the eNB. The LTE system employs a hybrid automatic repeat request (HARQ) process and semi-persistent scheduling (SPS) for data transmission between the communication device 10 and the eNB 120. When the communication device 10 initiates an uplink data transmission to the eNB 120 by the HARQ process, the communication device 10 will wait for the eNB 120 to respond with a feedback or scheduling grant upon completion of the uplink transmission. In an SPS communication system, the persistent scheduling is turned on to allocate transmission resources prior to a data spurt on the uplink or downlink data transmission, and turned off until a change of the transmission resource is required, thereby reducing scheduling assignment overhead. When semi-persistent scheduling is utilized, the communication device 10 may not receive the feedback or grant response in the HARQ process at every Round Trip Time (RTT) subframe. Further, the communication device 10 may miss the feedback or grant response in the HARQ process. If the communication device 10 receives the feedback requesting for retransmission, or no feedback due to SPS or data loss by the time of the next uplink data transmission, the communication device 10 will perform the retransmission of the previous uplink data.

The communication device 10 comprises a controller module 100 and a communication module 102 coupled thereto. The controller module 100 allocates a predetermined power or required power to a retransmission signal or a carrier that carries the retransmission signal, determines a remaining power according to the predetermined power and a predetermined upper limit power, and distributes the remaining power over at least one new transmission signal. The retransmission signal is carried on a first carrier 16 and the at least one new transmission signal is carried on at least one new carrier 18 for uplink transmission to the eNB 120. The carriers in the LTE system are referred hereafter as component carriers. The at least one new carrier may be identical or different from the first carrier 16. In some embodiments, the at least one new carrier 18 is component carrier other than the first carrier 16. In other embodiments, the at least one new transmission signal may be carried on the component carrier 16 with a HARQ process different from the retransmission. The predetermined upper limit power may either be a predetermined power range or a predetermined power value, representing either the maximum allowed transmission power of the communication device 10 or a maximum allowed transmission power of each component carrier. The communication device 10 may select a power value from the predetermined power range as the maximum allowed transmission power of the communication device 10. The communication device 10 keeps transmission power of each component carrier being less or equal to the maximum allowed transmission power of each component carrier, and keeps total transmission power of all component carriers being less or equal to the maximum allowed transmission power of the communication device 10. The remaining power may be determined by determining a difference between the predetermined upper limit power and the predetermined power.

In one embodiment, the communication module 102 employs different sets of antenna to transmit the retransmission signals and the new transmission signals on the same component carrier. Each set of antenna comprises one or more antennas derived from a transmission mode of the retransmission signals or the new transmission signals. The transmission mode may be single antenna transmission, multiple antenna transmit diversity, or beamforming. The retransmission signals and the new transmission signals can have different HARQ processes for identification,

The controller module 100 may distribute the remaining power by either distributing the remaining power over the at least one new transmission signal according to transmission format selection, distributing remaining power over the at least one new transmission signal according to required power thereof, or distributing the remaining power evenly over the at least one new transmission signal. In one embodiment, the communication device 10 distributes all predetermined upper limit power evenly over the at least one transmission signal. For example, when 2 new components carriers are allocated for the new transmission, the remaining power is divided in half to provide power for the 2 new components carriers. In another embodiment, the communication device 10 determines a transmission format for each new transmission and allocates required power of each new transmission according to the transmission format. The controller module 100 may select a transmission format of the new transmission. The transmission format selection may be based on Enhanced Transport Format Combination (E-TFC) selection or Modulation and Coding Schemes (MCS) selection. The E-TFC selection reduces adjacent channel leakage problems by performing rate selection by selecting the data rate and coding scheme for data or data-burst transmission. The controller module 100 may evaluate a transport format combination (TFC) that can be used for the new transmission such that a sum of the all allocated power of the new component carriers is less than or equal to the remaining power. The MCS selection selects modulation schemes and coding rates based on channel conditions. The modulation scheme may be quadrature phase shift keying (QPSK), 16 quadrature amplitude modulation (QAM), or 64QAM. The coding rate defines portion of the total amount of information that is useful. The controller module 100 may select a modulation scheme and a coding rate of new transmission, so that a sum of all allocated power of the new component carriers is less than or equal to the remaining power.

In one embodiment, the eNB 120 configures Carrier Aggregation (CA) of the communication device 10 by physical layer signaling or higher layer signaling, such as Radio Resource Control (RRC) signaling. In the CA, multiple component carriers are aggregated to increase bandwidth for uplink data transmission. The communication device 10 possesses the configuration, parameters, and information of carrier aggregation through the RRC signaling. In the CA configuration, the configured component carriers consist of a primary component carrier and at least one secondary component carrier. The primary component carrier is always activated for data transmission or reception, while the secondary component carrier is activated or deactivated by a Medium Access Control (MAC) control element data unit in MAC layer.

The communication module 102 may comprise a baseband module (not shown) and a radio frequency (RF) module (not shown). The baseband module may comprise hardware to perform baseband signal processing including digital signal processing, coding and decoding, and so on. The RF module may comprise hardware to perform analog to digital conversion (ADC), digital to analog conversion (DAC), gain adjusting, modulation, demodulation, and so on. The RF module may receive RF signals from the eNB 120 and down-convert the received RF wireless signals to baseband signals to be processed by the baseband unit, or receive baseband signals from the baseband unit and up-convert the received baseband signals to RF wireless signals for uplink transmission. The RF module may comprise a mixer to up-convert the baseband signals with a component carrier oscillated at a radio frequency of the wireless communications system. The radio frequency may be 900MHz, 1900MHz, or 2100MHz utilized in WCDMA systems, or may be 900MHz, 2100MHz, or 2.6GHz utilized in LTE systems, or others depending on the radio access technology (RAT) in use. The communication module 102 performs uplink transmission on one or more component carriers according to the allocated transmission power. Since the controller module 100 has allocated the predetermined power for the retransmission and the power for each new component of the new transmission, the communication module 102 performs the retransmission on the first component carrier 16 according to the predetermined power, and performs the new transmission on each new component carrier according to each allocated power.

In one embodiment, the communication module 102 transmits power information of the predetermined power of the retransmission signal and the allocated power of each new transmission signal by the uplink control information of an uplink control channel or an uplink data channel. The transmitted information may be later used at the eNB 120 to perform power management of the communication device 10. The uplink control channel may be Physical Uplink Control Channel (PUCCH). The uplink data channel may be Physical Uplink Shared Channel (PUSCH). The uplink control information may be transmitted in a MAC control element data unit, which consists of a MAC header, zero or more MAC service data units, zero or more MAC control elements (CEs), and optionally padding bits. The uplink control information may be a power headroom report. The power headroom report comprises power information of each active uplink component carriers or all uplink component carriers. The power headroom report also comprises power information of each of active uplink carriers or all uplink carriers, where the uplink carriers are component carriers for uplink transmission, and the active uplink carriers are component carriers carrying the retransmission or any new transmission signals. The power headroom report may also comprise power information of an uplink control channel or an uplink data channel. The content of a power headroom report may comprise a difference between the maximum allowed transmission power and the allocated power, either a total value or a value per resource block, or the allocated power, either a total value or a value per resource block. Accordingly, the communication device 10 selects the maximum allowed transmission power from the predetermined power range in some embodiments, the selected maximum allowed transmission power (upper limit power) may be included in the power headroom report.

The communication device 10 provides a power allocation mechanism according to the present invention for uplink retransmission and transmission in a multi-carrier communication system, thereby preventing excessive power usage, which increases battery life, and reduces cellular signal interference.

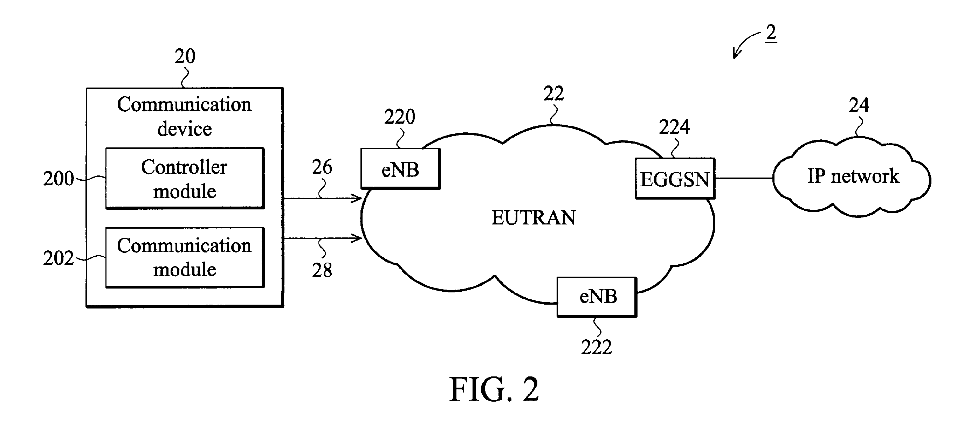

FIG. 2 is a block diagram of a wireless communication system 2, incorporating a wireless communication device 20 in accordance with the present invention. The wireless communication system 2 is an LTE system comprising the communication device 20 and service network 22.

The communication device 20 comprises a controller module 200 and a communication module 202 coupled thereto. When the communication device 20 retransmits uplink data on at least two component carriers, the communication device 20 distributes a maximum allowed transmission power (predetermined upper limit power) over at least two retransmission signals. The controller module 200 provides at least two component carriers 26, 28 that carry the at least two retransmission signals, and allocates the predetermined upper limit power to the at least two the retransmission signals carried on the two component carriers 26 and 28. The predetermined upper limit power may either be a predetermined power range or a predetermined power value, representing either the maximum allowed transmission power of the communication device 20 or a maximum allowed transmission power of each component carrier. The communication device 20 may select a power value from the predetermined power range as the maximum allowed transmission power of the communication device 20. The communication device 20 keeps transmission power of each component carrier being less or equal to the maximum allowed transmission power of each component carrier, and keeps total transmission power of all component carriers being less or equal to the maximum allowed transmission power of the communication device 20.

The controller module 200 may distribute the maximum allowed transmission power by either distributing the maximum allowed transmission power over the at least two retransmission signals according to transmission format selection, distributing maximum allowed transmission power over the at least two retransmission signals according to required power thereof, or distributing maximum allowed transmission power evenly over the at least two retransmission signals. In one embodiment, the controller module 200 distributes the predetermined upper limit power evenly over the at least two retransmission signals. For example, when retransmission is performed on two component carriers, the controller module 200 may distribute the maximum allowed transmission power of the communication device 20 equally to the two component carriers. In another embodiment, the communication device 20 allocates the predetermined upper limit power to the at least two retransmission signals according to E-TFC selection or MCS selection. The E-TFC selection reduces adjacent channel leakage problems by performing rate selection by selecting the data rate and coding scheme for data or data-burst transmission. The controller module 200 may evaluate a transport format combination that can be used for the at least two transmission such that a sum of the allocated power of all component carriers is less than or equal to the maximum allowed transmission power. The MCS selection selects modulation schemes and coding rates based on channel conditions. The modulation scheme may be QPSK, 16 QAM, or 64QAM. The coding rate defines a portion of the total amount of information that is useful. The controller module 200 may select a modulation scheme and a coding rate of retransmission, so that a sum of the allocated power of all component carriers is less than or equal to the maximum allowed transmission power.

The communication module 202 may comprise a baseband module (not shown) and a radio frequency (RF) module (not shown). The baseband module may comprise hardware to perform baseband signal processing including digital signal processing, coding and decoding, and so on. The RF module may comprise hardware to perform analog to digital conversion (ADC), digital to analog conversion (DAC), gain adjusting, modulation, demodulation, and so on. The RF module may receive RF signals from the eNB 220 and down-convert the received RF wireless signals to baseband signals to be processed by the baseband unit, or receive baseband signals from the baseband unit and up-convert the received baseband signals to RF wireless signals for uplink transmission. The RF module may comprise a mixer to up-convert the baseband signals with a component carrier signal oscillated at a radio frequency of the wireless communications system. The radio frequency may be 900MHz, 1900MHz, or 2100MHz utilized in WCDMA systems, or may be 900MHz, 2100MHz, or 2.6GHz utilized in LTE systems, or others depending on the radio access technology (RAT) in use. The communication module 202 performs uplink transmission on one or more component carriers according to allocated transmission power. Since the controller module 200 has distributed power for each retransmission carried on the component carrier, the communication module 202 transmits the at least two retransmission signals on the component carriers 26, 28 according to each distributed power.

In one embodiment, the communication module 202 transmits power information of the predetermined power of the retransmission signal and the allocated power of each new transmission signal by the uplink control information of an uplink control channel or an uplink data channel. The transmitted information may be later used at the eNB 220 to perform power management of the communication device 20. The uplink control channel may be Physical Uplink Control Channel (PUCCH). The uplink data channel may be Physical Uplink Shared Channel (PUSCH). The uplink control information may be transmitted in a MAC control element data unit, which consists of a MAC header, zero or more MAC service data units, zero or more NIAC control elements (CEs), and optionally padding bits. The uplink control information may be a power headroom report. The power headroom report comprises power information of each active uplink component carriers or all uplink component carriers. The power headroom report also comprises power information of each of active uplink carriers or all uplink carriers, where the uplink carriers are component carriers for uplink transmission, and the active uplink carriers are component carriers carrying the retransmission or any new transmission signals. The power headroom report may also comprise power information of an uplink control channel or an uplink data channel. The content of a power headroom report may comprise a difference between the maximum allowed transmission power and the allocated power, either a total value or a value per resource block, or the allocated power, either a total value or a value per resource block. Accordingly, the communication device 20 selects the maximum allowed transmission power from the predetermined power range in some embodiments, the selected maximum allowed transmission power (upper limit power) may be included in the power headroom report.

The communication device 20 provides a power allocation mechanism according to the present invention for uplink retransmission in a multi-carrier system, thereby preventing excessive power usage, which increases battery life, and reduces cellular signal interference.

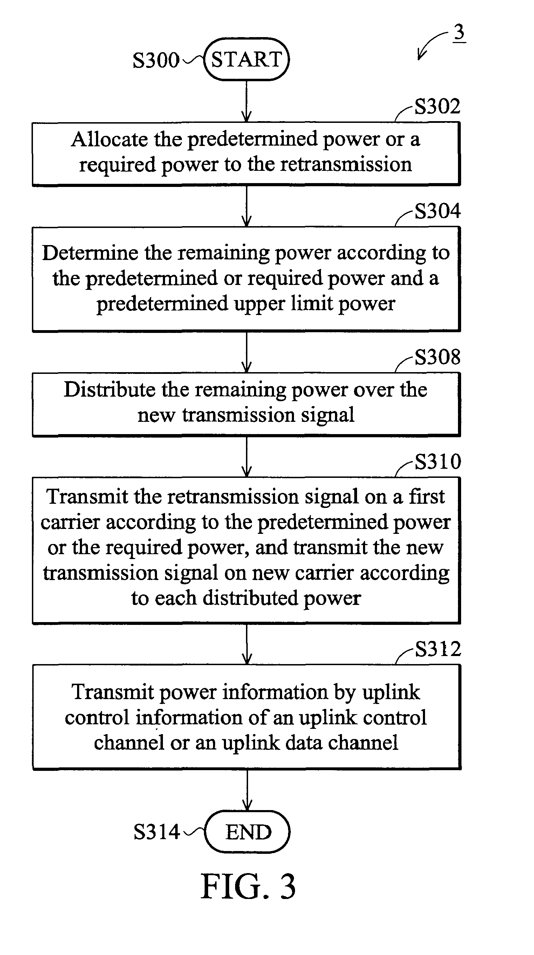

FIG. 3 is a flowchart of an exemplary power allocation method according to the present invention, incorporating the communication device 10 in FIG. 1.

Upon a startup of method 3, the communication device 10 determines whether retransmission is needed. Carrier aggregation may be enabled and configured for the communication device 10 by physical layer signaling or higher layer signaling, such as RRC signaling, so that the communication device 10 may be able to aggregate multiple component carriers for data transmission. In step S302, the communication device 10 provides the predetermined power or required power for the retransmission signal.

Next in step S304, the communication device 10 determines a remaining power according to the predetermined power and a predetermined upper limit power. The remaining power may be determined by taking a difference of the predetermined power and the predetermined upper limit power.

In step S308, the communication device 10 distribute the remaining power over the at least one new transmission signal carried on the at least one carriers. In one embodiment, the communication device 10 allocates the remaining power by distributing the remaining power evenly over the at least one new component carrier 18. In another embodiment, the communication device 10 allocates the remaining power by selecting a transmission format of the new transmission based on E-TFC selection, such that a sum of the allocated power of all new component carriers is less than or equal to the remaining power. In yet another embodiment, the communication device 10 allocates the remaining power by selecting modulation schemes and coding rates, so that a sum of allocated power of all new component carriers is less than or equal to the remaining power. The modulation scheme may be quadrature QPSK, 16 QAM, or 64QAM. The coding rate defines a portion of the total amount of information that is useful.

In step S310, the communication device 10 transmits the retransmission signal on the first carrier 16 according to the predetermined power or the required power, and transmits the new transmission signal on new carrier 18 according to each distributed power.

In step S312, the communication device 10 transmits information of the predetermined power and each allocated power of each new component carrier by the uplink control information of an uplink control channel or an uplink data channel. The uplink control channel may be PUCCH. The uplink data channel may be PUSCH. The uplink control information may be transmitted in a MAC control element of a MAC protocol data unit. The uplink control information may be a power headroom report. The power headroom report comprises power information of active uplink component carriers or all uplink component carriers. The power headroom report may also comprise power information of an uplink control channel or an uplink data channel. The content of a power headroom report may comprise a difference between the maximum allowed transmission power and the allocated power, either a total value or a value per resource block, or the allocated power, either a total value or a value per resource block.

In step S314, method 3 is stopped and the power allocation method is completed.

Method 3 may be implemented by hardware, software, firmware, or a combination thereof. Method 3 provides a power allocation mechanism according to the present invention for uplink retransmission and transmission of a multi-carrier communication system, thereby preventing excessive power usage, which increases battery life, and reduces cellular signal interference.

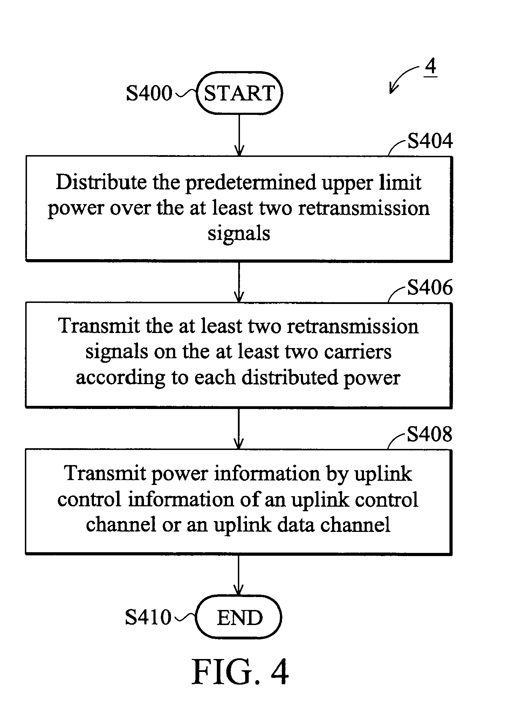

FIG. 4 is a flowchart of an exemplary method according to the present invention, incorporating the communication device 20 in FIG. 2.

Upon start of method 4, the communication device 20 determines whether retransmission is needed.

In step S404, the communication device 10 distributes a predetermined upper limit power to the retransmission signals. In one embodiment, the communication device 10 allocates the maximum allowed transmission power by distributing the maximum allowed transmission power evenly over the at least two component carriers 26, 28. In another embodiment, the communication device 10 allocates the maximum allowed transmission power by selecting a transmission format of the new transmission based on E-TFC selection, such that a sum of the allocated power of all component carriers is less than or equal to the maximum allowed transmission power. In yet another embodiment, the communication device 10 allocates the maximum allowed transmission power by selecting modulation schemes and coding rates, so that a sum of the allocated power of all component carriers is less than or equal to the maximum allowed transmission power. The modulation scheme may be quadrature QPSK, 16 QAM, or 64QAM. The coding rate defines a portion of the total amount of information that is useful.

In step S406, the communication device 10 transmits the retransmission signals on each component carrier according to each distributed power.

In step S408, the communication device 10 transmits information of each allocated power of each new component carrier by the uplink control information of an uplink control channel or an uplink data channel. The uplink control channel may be PUCCH. The uplink data channel may be PUSCH. The uplink control information may be transmitted in a MAC control element of a MAC protocol data unit, which consists of a MAC header, zero or more MAC service data units, zero or more MAC control elements (CEs), and optionally padding bits. The uplink control information may be a power headroom report. The power headroom report comprises power information of active uplink component carriers or all uplink component carriers. The power headroom report may also comprise power information of an uplink control channel or an uplink data channel. The content of a power headroom report may comprise a difference between the maximum allowed transmission power and the allocated power, either a total value or a value per resource block, or the allocated power, either a total value or a value per resource block.

In step S410, method 4 stops and the power allocation method completes.

Method 4 may be implemented by hardware, software, firmware, or a combination thereof. Method 4 provides a power allocation mechanism according to the present invention for uplink retransmission of a multi-carrier communication system, thereby preventing excessive power usage, which increases battery life, and reduces cellular signal interference.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the invention shall be defined and protected by the following claims and their equivalents.

## Claims

1. A communication device, comprising:
a controller module, for allocating a predetermined or required power to a retransmission or a first carrier that carries the retransmission, determining a remaining power according to the predetermined or required power and a upper limit power, and allocating the remaining power to at least one new transmission or at least one carrier; and
a communication module, coupled to the controller module, for performing the retransmission on the first carrier according to the predetermined or required power, and performing the at least one new transmission on the at least one carrier according to each allocated power.

2. The communication device of claim 1, wherein the upper limit power is the total maximum power of the communication device or maximum power of each carrier configured to the communication device, and the upper limit power is a power range or a power value.

3. The communication device of claim 1, wherein the controller module performs transmission format selection for each of the at least one new transmission or the controller module selects a transmission format of the at least one new transmission.

4. The communication device of claim 1, wherein the at least one new transmission is transmitted on the first carrier or at least one carrier other than the first carrier, or wherein the at least one carrier comprises the first carrier and/or another carrier other than the first carrier.

5. The communication device of claim 1, wherein the controller module allocates a predetermined transmission power to the at least one new transmission, or the controller module performs transmission power pre-allocation in advance for all carriers or each of the at least one carrier, or the controller module performs transmission power pre-allocation in advance for at least one non-scheduled transmission, or the controller module performs power split according to transmission format pre-selection in advance.

6. The communication device of claim 3, wherein the transmission format selection is based on Enhanced Transport Format Combination (E-TFC) or Modulation and Coding Schemes (MCS).

7. The communication device of claim 1, wherein the controller module is further configured to perform carrier aggregation by physical layer signaling or higher layer signaling.

8. The communication device of claim 1, wherein the controller module allocates the remaining power by distributing the remaining power over the at least one carrier performing new transmission or over new transmission according to transmission format selection, or distributing remaining power over the at least one carrier performing new transmission or over new transmission according to required power thereof, or distributing the remaining power evenly over the at least one carrier or new transmission.

9. A communication device, comprising:
a controller module, for allocating transmission power over at least one carrier or at least one transmission; and
a communication module, coupled to the controller module, for transmitting power information of the allocated transmission power by uplink control information on an uplink control channel and/or an uplink data channel.

10. The communication device of claim 9, wherein the uplink control information is a power headroom report comprising power information of each of active uplink carriers, at least one active uplink carrier or all uplink carriers.

11. The communication device of claim 9, wherein the power information of each of active uplink carriers, at least one active uplink carrier or all uplink carriers comprises power information used for transmission on at least one of an uplink control channel and/or an uplink data channel.

12. The communication device of claim 9, wherein the power information comprises upper limit power information of each active uplink carrier, at least one active uplink carrier or each of all uplink carriers.

13. The communication device of claim 9, wherein the uplink control information on an uplink data channel is transmitted in a Medium Access Control (MAC) control data unit.

14. A communication device, comprising:
a controller module, for allocating predetermined power to at least two retransmission carried on at least one carrier or at least two carriers that carry at least one retransmission; and
a communication module, coupled to the controller module, for performing the at least two retransmission on the at least one carrier or the at least one retransmission on the at least two carriers according to each allocated power.

15. The communication device of claim 14, wherein when the number of the at least two carriers for retransmission equals to the total number of uplink carriers configured to the communication device, the controller module allocates the predetermined power according to transmission format selection.

16. The communication device of claim 14, wherein the controller module further determines a remaining power according to the predetermined or required power and a predetermined upper limit power, and allocates the remaining power to at least one new transmission or at least one carrier for new transmission.

17. The communication device of claim 16, wherein the controller module allocates the predetermined power by distributing the remaining power over the at least two retransmission or the at least two carriers according to the transmission format selection, by distributing the remaining power over the at least two retransmission or the at least two carriers according to required power thereof, or by distributing the predetermined power evenly over the at least two retransmission or the at least two carriers.

18. The communication device of claim 16, wherein the predefined upper limit power is the total maximum power of the communication device or maximum power of each of the configured carrier for the communication device, and the upper limit power is a power range or a power value.

19. The communication device of claim 14, wherein the at least one new transmission is transmitted on the first carrier or at least one carrier other than the first carrier, or wherein the at least one carrier comprises the first carrier and/or another carrier other than the first carrier.

20. The communication device of claim 14, wherein the controller module allocates a predetermined new transmission power to the at least two retransmission.

21. The communication device of claim 14, wherein the controller module allocates the predetermined power to the at least two retransmission or the at least two carriers according to E-TFC selection or MCS selection.

22. A method of allocating power in a communication device, comprising:
allocating a predetermined or required power to a retransmission or a first carrier that carries the retransmission;
determining a remaining power according to the predetermined or required power and a upper limit power;
allocating the remaining power to at least one new transmission or at least one carrier; and
performing the retransmission on the first carrier according to the predetermined or required power;
performing the at least one new transmission on the at least one carrier according to each allocated power.

23. The method of claim 22, wherein the upper limit power is the total maximum power of the communication device or maximum power of each carrier configured to the communication device, and the upper limit power is a power range or a power value.

24. The method of claim 22 further comprising:
performing transmission format selection for each of the at least one new transmission or selecting a transmission format of the at least one new transmission.

25. The method of claim 22, wherein the at least one new transmission is transmitted on the first carrier or at least one carrier other than the first carrier, or wherein the at least one carrier comprises the first carrier and/or another carrier other than the first carrier.

26. The method of claim 22 further comprising:
allocating a predetermined transmission power to the at least one new transmission; and
performing transmission power pre-allocation in advance for all carriers or each of the at least one carrier, or performing transmission power pre-allocation in advance for at least one non-scheduled transmission, or performing power split according to transmission format pre-selection in advance.

27. The method of claim 24, wherein the transmission format selection is based on Enhanced Transport Format Combination (E-TFC) or Modulation and Coding Schemes (MCS).

28. The method of claim 22, wherein the communication device is configured to perform carrier aggregation by physical layer signaling or higher layer signaling.

29. The method of claim 22 further comprising:
allocating the remaining power by distributing the remaining power over the at least one carrier performing new transmission or over new transmission according to transmission format selection, by distributing remaining power over the at least one carrier performing new transmission or over new transmission according to required power thereof, or by distributing the remaining power evenly over the at least one carrier or new transmission.

30. A method of allocating power in a communication device, comprising:
allocating transmission power over at least one carrier or at least one transmission; and
transmitting power information of the allocated transmission power by uplink control information on an uplink control channel and/or an uplink data channel.

31. The method of claim 30, wherein the uplink control information is a power headroom report comprising power information of each of active uplink carriers, at least one active uplink carrier or all uplink carriers.

32. The method of claim 30, wherein the power information of each of active uplink carriers, at least one active uplink carrier or all uplink carriers comprises power information used for transmission on at least one of an uplink control channel and/or an uplink data channel.

33. The method of claim 30, wherein the power information comprises upper limit power information of each active uplink carrier, at least one active uplink carrier or each of all uplink carriers.

34. The method of claim 30, wherein the uplink control information on an uplink data channel is transmitted in a Medium Access Control (MAC) control data unit.

35. A method of allocating power in a communication device, comprising:
allocating predetermined power to at least two retransmission carried on at least one carrier or at least two carriers that carry at least one retransmission; and
transmitting the at least two retransmission on the at least one carrier or the at least one retransmission on the at least two carriers according to each allocated power.

36. The method of claim 35, wherein when the number of the at least two carriers for retransmission equals to the total number of uplink carriers configured to the communication device, the controller module allocates the predetermined power according to transmission format selection.

37. The method of claim 35 further comprising:
determines a remaining power according to the predetermined or required power and a predetermined upper limit power; and
allocating the remaining power to at least one new transmission or at least one carrier for new transmission.

38. The method of claim 37 further comprising:
allocating the predetermined power by distributing the remaining power over the at least two retransmission or the at least two carriers according to the transmission format selection, by distributing the remaining power over the at least two retransmission or the at least two carriers according to required power thereof, or by distributing the predetermined power evenly over the at least two retransmission or the at least two carriers.

39. The method of claim 37, wherein the predefined upper limit power is the total maximum power of the communication device or maximum power of each of the configured carrier for the communication device, and the upper limit power is a power range or a power value.

40. The method of claim 35, wherein the at least one new transmission is transmitted on the first carrier or at least one carrier other than the first carrier, or wherein the at least one carrier comprises the first carrier and/or another carrier other than the first carrier.

41. The method of claim 35 further comprising:
allocating a predetermined new transmission power to the at least two retransmission.

42. The method of claim 35 further comprising:
allocating the predetermined power to the at least two retransmission or the at least two carriers according to E-TFC selection or MCS selection.
